# EUROPEAN PATENT APPLICATION

(11) **EP 3 264 355 A1**
(43) Date of publication of application: **03.01.2018**
(21) Application number: 16755948.3
(22) Date of filing: 26.02.2016
(51) Int. Cl.: G06Q 40/02, G06Q 20/10, H04W 12/06, H04W 12/08

(54) **ELECTRONIC DEVICE AND OPERATION METHOD THEREFOR**

(30) Priority: 27.02.2015 US 201562126121 P
(71) Applicant: Samsung Electronics Co., Ltd., Suwon-si, Gyeonggi-do 16677 (KR)
(72) Inventor: PARK, Chanpyo, Seoul 08750 (KR); KIM, Hyun, Seoul 06764 (KR); SHIN, Boosun, Seoul 06764 (KR); KIM, Sungwang, Seoul 06335 (KR)
(74) Representative: Nederlandsch Octrooibureau
(86) International application number: PCT/KR2016/001969
(87) International publication number: WO 2016/137298

(57) **Abstract**

An electronic device and an operation method therefor according to various embodiments may be configured to perform user authentication in response to an electronic card; detect access to an external device; and perform, by means of the electronic card, account transactions via the external device.

## Description

### Technical Field

Various embodiments of the present invention relate to an electronic device and an operation method thereof.

### Background Art

With developments of mobile communication technology, an electronic device can perform not only a voice call function but also various data communication functions. The electronic device, for example, a mobile device or user equipment can provide a variety of services through various applications. The electronic devices can provide a multimedia service, for example, a music service, a video service, or a digital broadcasting service, or a network-based communication service such as a call, wireless Internet, a Short Message Service (SMS), or a Multimedia Messaging Service (MMS). Also, the electronic device evolves from a simple communication medium to a device enabling various functions such as communication, distribution, Internet, or payment, and can be used across a social, cultural, financial, or retail industry.

The electronic device can provide, for example, mobile payment through the electronic device in a payment function. The electronic device can make a payment using the electronic device in the payment which transits, for example, from cash to a plastic card. Using a mobile payment service, the electronic device can pay for, for example, goods or services purchase through an online or offline (when goods are purchased and paid in an actual store or restaurant). In addition, the electronic device can include, for example, a communication function for receiving or sending payment information.

### Disclosure of Invention

### Technical Problem

However, such an electronic device has a problem that it does not provide mobile account transactions. In this regard, a user can merely use the mobile payment through the electronic device and cannot use account transactions. Thus, the user needs to go through a cumbersome procedure to enter information by personally manipulating an external device such as an Automated Teller Machine (ATM) for the account transactions.

### Solution to Problem

An operation method of an electronic device according to various embodiments can include performing user verification for an electronic card, detecting approach to an external device, and performing an account transaction through the external device using the electronic card.

An electronic device according to various embodiments can include a communication unit for communicating with an external device, and a control unit functionally coupled with the communication unit. According to various embodiments, the control unit can perform user verification in accordance with an electronic card, detects approach to an external device, and performs an account transaction through the external device using the electronic card.

### Advantageous Effects of Invention

An electronic device according to various embodiments can execute an account management function based on user verification. That is, the electronic device can perform account transactions, for example, at least one of an account withdrawal or an account deposit through an external device. For doing so, the electronic device can send transaction information for the account transaction to the external device. Hence, a user of the electronic device does not have to directly operate the external device and enter the transaction information. Therefore, security can be improved for user's personal information in the electronic device. Further, use efficiency of the electronic device can be improved.

### Brief Description of Drawings

FIG. 1A depicts a diagram of a system according to various embodiments.
FIG. 1B depicts a block diagram of an electronic device according to various embodiments.
FIG. 2 depicts a flowchart of an operation method of an electronic device according to various embodiments.
FIG. 3 depicts a flowchart of a user verification operation of FIG. 2.
FIG. 4 depicts a flowchart of a connection operation to an external device of FIG. 2.
FIG. 5 depicts a flowchart of an account withdrawal processing operation of FIG. 2.
FIG. 6 depicts a flowchart of a connection operation to an external device of FIG. 2.
FIG. 7 depicts a flowchart of an account deposit processing operation of FIG. 2.
FIG. 8, FIG. 9, FIG. 10, FIG. 11A, FIG. 11B, FIG. 11C, FIG. 12A, FIG. 12B, FIG. 12C, FIG. 13A, FIG. 13B, FIG. 13C, FIG. 13D, FIG. 14, FIG. 15A, FIG. 15B, FIG. 16A, FIG. 16B, FIG. 16C, and FIG. 16D depict diagrams of a screen for explaining an operation method of an electronic device according to various embodiments.

### Best Mode for Carrying out the Invention

Hereinafter, various embodiments of the present disclosure are described in detail with reference to the accompanying drawings. It should be understood that it is not intended to limit embodiments and terms used herein to a particular form but is to cover various modifications, equivalents, and/or alternatives of corresponding embodiments. In the description below of the accompanying drawings, similar reference numerals can be used to designate similar elements. The singular forms can include plural referents unless the context clearly dictates otherwise. In the present disclosure, an expression such as "A or B," or "at least one of A and/or B," can include all possible combinations of the listed items. Expressions such as "first," "second," "primarily," or "secondary," can modify corresponding components regardless of order or importance, distinguish one element from another element, and do not limit corresponding elements. When it is described that an element (e.g., a first element) is "(operatively or communicatively) coupled" to or "connected" to another element (e.g., a second element), the element can be directly connected to the other element or can be connected through another element (e.g., a third element).

An expression "configured to (or set)" used in the present disclosure can be used interchangeably with, for example, "suitable for," "having the capacity to," "designed to," "adapted to," "made to," or "capable of" by hardware or by software according to a situation. In some situations, the expression "apparatus configured to" can mean that the apparatus "can" operate together with another apparatus or component. For example, a phrase "a processor configured (or set) to perform A, B, and C" can indicate a generic-purpose processor (e.g., a Central Processing Unit (CPU) or an application processor) which can perform a corresponding operation by executing at least one software program stored at an exclusive processor (e.g., an embedded processor) for performing a corresponding operation or at a memory device.

An electronic device according to various embodiments of the present disclosure can include, for example, at least one of a smart phone, a tablet Personal Computer (PC), a mobile phone, a video phone, an e-book reader, a desktop PC, a laptop PC, a netbook computer, a workstation, a server, a Personal Digital Assistant (PDA), a Portable Multimedia Player (PMP), an MPEG 3 (MP3) player, a medical equipment, a camera, or a wearable device. The wearable device can include at least one of an accessory type (e.g., a watch, a ring, a bracelet, an ankle bracelet, a necklace, glasses, a contact lens, or a Head-Mounted-Device (HMD)), a fabric or clothing embedded type (e.g., electronic garments), a body attachable type (e.g., a skin pad or a tattoo), or an implantable circuit. In some embodiments, the electronic device can include as at least one of, for example, a television, a Digital Versatile Disc (DVD) player, an audio device, a refrigerator, an air-conditioner, a cleaner, an oven, a microwave oven, a washing machine, an air cleaner, a set-top box, a home automation control panel, a security control panel, a media box (e.g., Samsung HomeSync™, Apple TV™, or Google TV™), a game console (e.g., Xbox™, PlayStation™), an electronic dictionary, an electronic key, a camcorder, or an electronic frame.

In another embodiment, the electronic device can include as at least one of various medical devices (e.g., various portable medical measuring devices (a blood sugar measuring device, a heartbeat measuring device, a blood pressure measuring device, or a body temperature measuring device), a Magnetic Resonance Angiography (MRA) device, a Magnetic Resonance Imaging (MRI) device, a Computed Tomography (CT) device, a scanning machine, and an ultrasonic wave device), a navigation device, a Global Navigation Satellite System (GNSS), an Event Data Recorder (EDR), a Flight Data Recorder (FDR), a vehicle infotainment device, electronic equipment for ship (e.g., a navigation device for ship and gyro compass), avionics, a security device, a head unit for a vehicle, an industrial or home robot, a drone, an Automated Teller Machine (ATM) of a financial institution, a Point Of Sales (POS) device of a store, or an Internet of Things (IoT) device (e.g., a light bulb, various sensors, a sprinkler device, a fire alarm, a thermostat, a street light, a toaster, sports equipment, a hot water tank, a heater, and a boiler). According to an embodiment, the electronic device can include at least one of a portion of furniture, building/construction or vehicle, an electronic board, an electronic signature receiving device, a projector, or various measuring devices (e.g., water supply, electricity, gas, or electric wave measuring device). According to various embodiments, the electronic device can be flexible or a combination of two or more of the foregoing various devices. The electronic device according to an embodiment of the present disclosure is not limited to the foregoing devices. The term "user", as used herein, can refer to a person using an electronic device or a device using an electronic device (e.g., an artificial intelligence electronic device).

According to various embodiments, information associated with a bank account can be registered in a terminal. When the bank account is registered, for example, all functions available with a card issued from the bank can be conducted at an ATM using the terminal. For example, a cash withdrawal, a cash transfer, an account inquiry, a loan service, or an additional task can be covered using the ATM.

A method for registering the bank account in the terminal includes a method for capturing and recognizing a card issued by a bank as an image, a method for entering card information using a magnetic or an Integrated Circuit (IC) chip of a card issued by a bank, a method for entering account information online or through another application in the terminal, a method for entering account information from a user, or a method for recognizing an image of a bankbook, and other methods.

A process for registering the bank account in the terminal can be divided into two, which are a "registration" process for registering the bank account and a "verification" process for verifying user information. In the "registration" process, corresponding information can be stored temporarily or permanently in the terminal. Next, for the "verification" process, a user is verified by connecting to a bank, a card company, or an external verification company over a network. After the "registration" process is completed, when the "verification" process is not conducted according to a user request or a network status, the "verification" process alone may be carried out based on user's input data in the "registration" process. For example, when the "registration" process is completed and the "verification" process is not executed, corresponding information may be deleted and the "registration" process may be initiated.

The terminal enters account information. A method for capturing and recognizing a card issued by a bank as an image, a method for entering card information using a magnetic or an IC chip of a card issued by a bank, a method for entering account information online or through another application in the terminal, a method for entering account information from a user, or a method for recognizing an image of a bankbook, and other methods can be used.

When at least part of a card number or an account number is input to the terminal, additional information relating to the account can be automatically input. The information automatically input can include a bank name. For example, a user may directly enter additional information relating to the account. The information directly entered can include the bank name.

A process for entering a password of an account can be included in the "registration" process. Corresponding information can be temporarily or permanently stored in the terminal. Corresponding information can be encrypted and then stored. A corresponding password can be hidden by * or shade at the same time as the entering. When a password is temporarily stored in the terminal, it can be stored until the "verification" process is performed. Corresponding information can be delivered to the card company or the bank over a network in the "verification" process. The password may be erased unless the "verification" process is conducted after the "registration" process.

A process for checking whether the account is registered in the bank in the terminal can be included. If there is an account has been registered in the bank, the information entered in the "registration" process can be erased. According to another embodiment, if there is an account that has been registered in the bank previously, the information entered in the "registration" process may be stored and existing account information registered may be erased. When the "registration" information matches account information which does not complete the "verification", the "verification" process of corresponding account information can initiate. According to yet another embodiment, a plurality of account information may be entered even in the same bank as the existing account of the completed registration. Existing bank information registered may be utilized in the "verification" process or the "registration" process.

The "verification" process can include a process for displaying T&C received from the bank or the card company. Alternatively, T&C stored in the terminal may be displayed. Also, a process for entering user personal information may be included. Corresponding personal information can include at least one of a user name, a user nationality, a user's gender, a user's birthday, a terminal provider, and a user's phone number. The entered user personal information can be transmitted to the bank or the card company.

A process for connecting corresponding account information with verification information of the terminal before sending the user personal information to the bank or the card company can be included. The verification information of the terminal can use a method for entering at least one of a Personal Identification Number (PIN) and a password such as characters/numbers/special character, and a method for using user body information, at least one of finger print, iris, and face recognition. Also, the user may be verified using other application installed on the terminal. The verification information may be set in the "verification" process, or utilize existing information stored. Also, the user body information of the verification information may be registered in the verification process, or utilize existing body information stored. When the user is verified using other application stored in the terminal, the corresponding application can be an application relating to the bank or the card company involved in the account. The user may be verified using an additional verification method such as password input or Automated Response System (ARS) through a corresponding application and a corresponding verification result may be used in the "verification" process.

Additional verification using user's signature information according to policies of the bank or the card company may be enabled. Alternatively, besides the signature information, an additional verification process can proceed according to the policies of the bank or the card company. A corresponding process is always feasible during the "verification" process. The additional verification method can be at least one of One Time Password (OTP), verification using a security card, and verification using ARS.

When the "verification" process is completed, the terminal registration of the account information is completed.

When a Back key configured with H/W or S/W of the terminal is pressed during the "registration" process and the "verification" process, whole information may be erased without storing corresponding information. According to another embodiment, when the Back key is pressed, at least part of corresponding information may be stored. When the Back key is pressed during the "verification" process with the "registration" completed, at least part of information entered in the "registration" process can be stored.

When the "verification" process is not completed and aborted in the middle, a card or bankbook image may be shaded and displayed. Alternatively, inactive display of a corresponding card or bankbook can be displayed to the user using other method.

For a band or a card company not supported by the terminal, a popup notifying out-of-service can be displayed to the user. Alternatively, a popup notifying out-of-service can be displayed for a bankbook or a card not supported by the terminal. The popup can include a reason why the terminal does not support.

When the account information is completely registered, the complete registration can be displayed to the user. Upon completing the registration, the terminal can display the account information and bank service information through the terminal together.

Contents which can be displayed together can include an account name, account information, a daily transaction limit, and supportable ATM information. Separately, information about the daily transaction limit and a setting method can be displayed to the user.

Immediate payment using corresponding account information can be added to setting. The terminal can display a list of stores enabling the immediate payment using corresponding account information. Also, the terminal can also display benefit information for the user in the immediate payment using corresponding account information.

According to various embodiments, a balance of the account in relation to the completely registered account can be checked. To check the balance of the account, a password of the account may be entered. Also, with the balance checked, a withdrawal step may proceed immediately.

On an amount withdrawal screen, the user may enter his/her intended amount and select an intended bill type to withdraw. Also, the user can pre-select whether to output a receipt regarding the withdrawal. The terminal may send the selected information to the ATM in the withdrawal process and thus the withdrawal may proceed without a user's additional input. Corresponding setting may be pre-selected based on user's past information. The user's past information can be generated based on at least one of recent use information, use information of high frequency, or similar use information of other person.

The terminal can communicate account information and withdrawal information with the ATM using short-range communication such as Near Field Communication (NFC)/Bluetooth (BT)/Wireless Fidelity (WiFi). Alternatively, the terminal may communicate with the ATM using long-distance communication such as 3^{rd} Generation (3G). When the terminal communicates with the ATM, the user verification is completed and accordingly the withdrawal process can proceed without a user's input.

A balance of a corresponding account can be updated immediately after the withdrawal process. The corresponding balance may be updated by receiving corresponding information from the bank or the card company. According to another embodiment, when receiving information notifying a successful transaction from the bank or the card company or the ATM, the terminal may directly calculate and display the balance by applying the input withdrawal amount information to existing balance information.

The terminal can display status information of the completely registered account information. The terminal can display one of a normal account such as XXXX, an account requiring the "verification" process, and an abnormal account requiring an additional action. When the additional action is required, the user can make the corresponding account normal by using the ARS or visiting the bank and the normal account can be displayed.

Detailed information regarding the completely registered account can be displayed. The detailed information can display corresponding information when a corresponding account is unavailable. Also, the detailed information can display a deposit/withdrawal list of the account. Also, the deposit/withdrawal list may enable "cancel". Also, the user may view contact information of a customer service and T&C information in relation to the account. Also, an icon for deleting the account may be displayed together.

The verification method when cash is withdrawn using the entered account information and the verification method when the payment proceeds immediately can be different or the same. Even when the verification methods are the same, different passwords and biometric information can be set.

According to various embodiments, the terminal can use various methods to drive a pay application to proceed with the payment. When tagging to NFC of the ATM, the terminal can display account information list enabling the withdrawal. When bank information is received from the ATM, account information relating to a corresponding bank may be displayed.

When recognizing a user's particular gesture even in a lock screen state or in a turned-off screen, the terminal may drive the pay application. Also, even when recognizing a particular gesture in an idle screen state, the terminal may drive the pay application. To recognize the gesture, the terminal can drive recognition software for recognizing the gesture always in a background and drive the pay application only for a particular gesture.

According to various embodiments, after driving the application, the user can perform a user input so as to display a card or a bankbook relating to an intended account to settle at the center of the screen. A corresponding user input can include scrolling.

When the card or bankbook relating to the user's intended account is displayed at the center of the screen, the terminal can proceed with the payment by inputting a verification method pre-selected by the user. The recognition method can include password entering and biometric information recognition. When an input or a user gesture regarding "Withdraw" is input, rather than the pre-selected verification method, the cash withdrawal process can proceed.

After the verification is completed, the terminal can check a current battery state before the settlement. When a remaining battery power is lower than a preset value, the terminal can display unavailable settlement to the user and abort the payment process.

Next, the electronic device can receive the account password of the bank from the user.

After the bank account password verification is completed, the terminal can send payment information to a PoS terminal through NFC and MST. When detecting an NFC signal, the terminal aborts MST transmission. As sending the payment information through the NFC and the MST, the terminal can display an animation displaying a payment time limit. As sending the payment information through the NFC and the MST, the terminal can notify the user of the payment information delivery using the animation, a vibration, or a sound. The displaying of the animation, the vibration, or the sound can change according to user's setting.

As sending the payment information through the NFC and the MST, input of a multitasking H/W key may not operate. This can be implemented using a method which generates H/W interrupt but does not process a corresponding interrupt at an AP stage and a method which does not generate the H/W interrupt at all.

When the payment is completed, payment information can be displayed to the user. Corresponding payment information may be received from the card company or the bank, received directly from the PoS (over a short-range or long-distance network), or received from an intermediate server which forwards payment information of the PoS to the card company or the bank. The corresponding payment information can display a payment complete time, an authorization number, a merchant name, and a payment amount. Also, an icon for canceling the payment may be displayed together. When the payment is canceled, the cancelled payment with (-) may be displayed to the user.

When the payment is completed and an additional promotion event is available, the terminal can display corresponding information together with the payment information.

After the application is driven, a user input can be performed to display the card or the bankbook relating to the user's intended account at the center of the screen. A corresponding user input can include scrolling.

When the card or the bankbook relating to the user's intended account is displayed at the center of the screen, and when a user's touch input occurs at an icon relating to "Withdraw" or a predefined gesture is input, the terminal can proceed with the withdrawal process.

Next, the user can enter an account password of the bank or the card company. Verification through a corresponding password or verification through other method can be determined according to the policies of the bank or the card company. Also, a verification result of the corresponding password can be determined by the bank or the card company and delivered to the terminal.

When completing the verification of the bank or the card company, the terminal can display corresponding account information to the user. The corresponding account information can include the balance of the account.

When the verification of the bank or the card company is completed, withdrawal information can be received from the user. The withdrawal information can include at least one or more of a withdrawal amount, a type of user's favorite bill, and whether to output a receipt. The terminal may send the withdrawal information to the ATM in the withdrawal process and the withdrawal can proceed without user's additional input. Corresponding setting may be pre-selected based on user's past information. The user's past information can be generated based on at least one of recent use information, use information of high frequency, or similar use information of other person.

After the bank account password verification is completed, the terminal can perform self verification. The verification in the terminal can use a method for entering a PIN or biometric information. When at least one of biometric information stored in the terminal is modified before the self verification process using the biometric information, the corresponding verification process can perform user verification once more using the biometric information and additional verification information. Also, the terminal can control operations of a biometric recognition sensor to conduct biometric verification only when the withdrawal information is entered. In case of an iris, a camera can be driven after the withdrawal information is entered. In case of a fingerprint sensor, the terminal can drive the fingerprint sensor after the withdrawal information is entered. In case of a display-integrated fingerprint sensor, fingerprint can be verified at the same time as the user presses an end button. Also, the terminal may display the sensor driving to the user together with the sensor operation. According to yet another embodiment, the terminal can verify the user by driving the camera at the same time as the withdrawal information input starts and recognizing user face or iris information. According to still another embodiment, the terminal can verify the by driving the display-integrated fingerprint sensor at the same time as the withdrawal information input starts and recognizing a fingerprint upon the user input.

After the self verification is completed, the terminal can deliver the withdrawal information to the ATM through the NFC and the MST and attempt the withdrawal.

When the withdrawal information is entered, the self verification is conducted, and a delayed time exceeds the time limit, the terminal can re-conduct the verification of the bank or the card company. Corresponding time limit can vary according to the policies of the bank or the card company.

When exceeding the daily transaction amount limit, the terminal calculates a corresponding amount and informs the excess to the user. For doing so, the terminal can store a transaction amount on a daily basis in a corresponding account and notify the user when a sum of entered amounts exceeds.

When the user inputs the amount, ", (comma)" may be displayed automatically at every three digit.

When exceeding the daily transaction amount limit, the terminal may inform the user of the amount excess. The daily transaction amount may vary according to the policies of the bank or the card company, and can be greater than a current balance. According to the policies of the bank or the card company, a corresponding value may be stored in the application.

As delivering the withdrawal information to the ATM through the NFC and the MST, the terminal can display an animation displaying a withdrawal information delivery time. As sending the withdrawal information through the NFC and the MST, the terminal can inform the user of the withdrawal information delivery through an animation, a vibration, or a sound. The displaying of the animation, the vibration, or the sound can change according to user's setting.

While the withdrawal information is delivered through the NFC and the MST, the input of the multitasking H/W key may not operate. This can be implemented using the method which generates H/W interrupt but does not process a corresponding interrupt at the AP stage and a method which does not generate the H/W interrupt at all.

The withdrawal result can be displayed through a notification. A corresponding notification may be received from the bank or the card company, or directly from the ATM. The displayed withdrawal result can include at least one of a bank name, a bank logo, a transaction time, a transaction amount, and an ATM location.

When the withdrawal is completed, the withdrawal information can be displayed in the form of a receipt, which can display at least one of the withdrawal ATM, the transaction time, and the transaction amount.

Different errors can occur in some cases during the withdrawal process. When an error occurs, a reason of the corresponding error can be displayed together.

When a particular condition is not satisfied in the PIN registration process, the PIN registration is disabled. The particular condition can be information directly relating to the user, which can include a user name, a birthday, account information, a phone number, an address, and so on.

When the bank or the card company checks a server, the account withdrawal or transaction of the corresponding bank or card company can be disabled.

When the same account is registered already for the same bank, the terminal can notify corresponding information to the user.

The terminal can prevent the same account from registering over a limited number of times in a day. To prevent the repeated registration of the same account, account information registered on a daily basis can be stored in the terminal or the server.

To register the account in the terminal, only the same account owner as the actual user of the terminal is allowed. When the terminal user and the account owner are different, the account registration can be aborted.

To register the account in the terminal, the phone number of the terminal should match a phone number of the account owner stored in the account. When the corresponding information differ, the account registration can be enabled by making a call to the bank or the card company, conducting additional verification, and changing the account owner phone number.

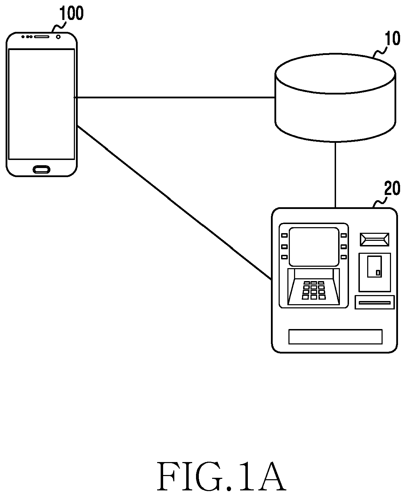

FIG. 1A depicts a diagram of a system according to various embodiments.

Referring to FIG. 1A, the system can include a financial institution 10, an external device 20, and an electronic device 100.

The financial institution 10 can manage a plurality of accounts and provide a financial transaction service. According to various embodiments, the financial institution 10 can manage at least one account for the user. For doing so, the financial institution 10 can manage account information for the user. For example, the account information can include at least one of account identification information for identifying the account, an amount in the account, an available amount unit, or whether to output a transaction receipt.

The external device 20 can engage in the account transaction. The external device 20 can process the account transaction for the user in place of the financial institution 10. The account transaction can include at least one of an account withdrawal or an account deposit. For example, the external device 20 can be an ATM.

The electronic device 100 can use the account transaction through the external device 20. For doing so, the electronic device 100 can receive account information from the financial institution 10. The electronic device 100 can use the account transaction through the external device 20 based on the account information. In so doing, the electronic device 100 can send the account information to the external device 20.

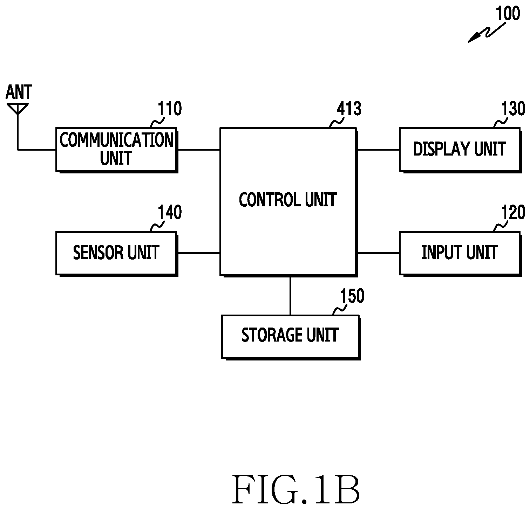

FIG. 1B depicts a block diagram of an electronic device 100 according to various embodiments.

Referring to FIG. 1B, the electronic device 100 according to various embodiments can include a communication unit 110, an input unit 120, a display unit 130, a sensor unit 140, a storage unit 150, and a control unit 160.

The communication unit 110 can perform communication in the electronic device 100. In so doing, the communication unit 110 can communicate with an external device (not shown) in various communication manners. For example, the communication unit 110 can conduct wired or wireless communication. For doing so, the communication unit 110 can access at least one of a mobile communication network or a data communication network. Alternatively, the communication unit 110 can conduct short-range communication. For example, the external device can include an electronic device, a base station, a server, and a satellite. According to an embodiment, the external device can be an ATM of a financial institution. The communication schemes can include Long Term Evolution (LTE), Wideband Code Division Multiple Access (WCDMA), Global System for Mobile Communications (GSM), WiFi, wireless Local Area Network (LAN), Bluetooth, Magnetic Secure Transmission (MST), and NFC.

The input unit 120 can generate input data in the electronic device 100. In so doing, the input unit 120 can generate the input data in response to a user input of the electronic device 100. The input unit 120 can include at least one input means. Such an input unit 120 can include a key pad, a dome switch, a physical button, a touch panel, a jog & shuttle, and a sensor.

The display unit 130 can output display data in the electronic device 100. The display unit 130 can include a Liquid Crystal Display (LCD), a Light Emitting Diode (LED) display, an Organic LED (OLED) display, a Micro Electro Mechanical Systems (MEMS) display, and an electronic paper display. At this time, the display unit 130 can be combined with the input unit 120 and implemented as a touch screen.

The sensor unit 140 can detect at least one of a state of the electronic device 100 or an ambient condition of the electronic device 100. The sensor unit 140 can include at least one sensor. According to various embodiments, the sensor unit 140 can include a finger print sensor for detecting a user fingerprint of the electronic device 100. For example, the finger print sensor can be combined with the input unit 120 of the electronic device 100. For example, the finger print sensor can include at least one of an optical fingerprint sensor (not shown) for capturing the user fingerprint of the electronic device 100 as an image, an ultrasonic fingerprint sensor (not shown), a capacitance fingerprint sensor (not shown), a semi-conductive fingerprint sensor (not shown) for detecting electric conductivity, or a thermal fingerprint sensor (heart rate sensor, not shown).

The storage unit 150 can store operation programs of the electronic device 100. According to various embodiments, the storage unit 150 can store programs for controlling an electronic payment function or an account management function based on at least one electronic card. The electronic payment function and the account management function can be provided to one application, and to independent applications. The electronic payment function can be a function for using a payment settlement service based on the electronic card, or managing payment history. The account management function can be a function for using a financial transaction service based on the electronic card or managing transaction history. The financial transaction service can include at least one of an account transaction, an account inquiry, an account transfer, a loan service, or other additional task. The account transaction can include at least one of, for example, an account deposit or an account withdrawal. The loan service can include at least one of, for example, a short-term load service or a cash service. The storage unit 150 can store data generating in execution of the programs. Also, the storage unit 150 can store card information for at least one electronic card. For example, the electronic card can include at least one of a payment card for using a payment service, a withdrawal card for using a financial transaction service, a service card for using a membership service, a gift card for product exchange, or a personal identification card for identification.

The control unit 160 control overall operation in the electronic device 100. For doing so, the control unit 160 can be functionally coupled to the components of the electronic device 100, and control the components of the electronic device 100. The control unit 160 can receive and process commands or data from the components of the electronic device 100. Thus, the control unit 160 can perform various functions. For example, the control unit 160 can include a function processing unit for each function. Also, the function processing unit can be an Application Processor (AP). According to various embodiments, the control unit 160 can execute the electronic payment function or the account management function based on at least one electronic card.

According to various embodiments, the control unit 160 can perform user verification in response to the electronic card. The control unit 160 can detect an approach to an external device. In so doing, the control unit 160 can determine transaction information in response to the electronic card. The transaction information can include at least one of deposit information for the account deposit or account withdrawal information for the account withdrawal. For example, the deposit information includes account identification information and an amount in the account, and can include at least one of a deposit type indicating at least one of cash or check, or whether to receive a deposit receipt. Meanwhile, the withdrawal information includes account identification information and an amount in the account, and can include at least one of a withdrawal amount, an amount unit, or whether to receive a withdrawal receipt. Also, in response to the electronic card, the terminal can perform the user verification, and detect the external device based on success of the user verification.

Hence, the control unit 160 can perform the account transaction through the external device using the electronic card. In so doing, the control unit 160 can send transaction information for the account transaction to the external device.

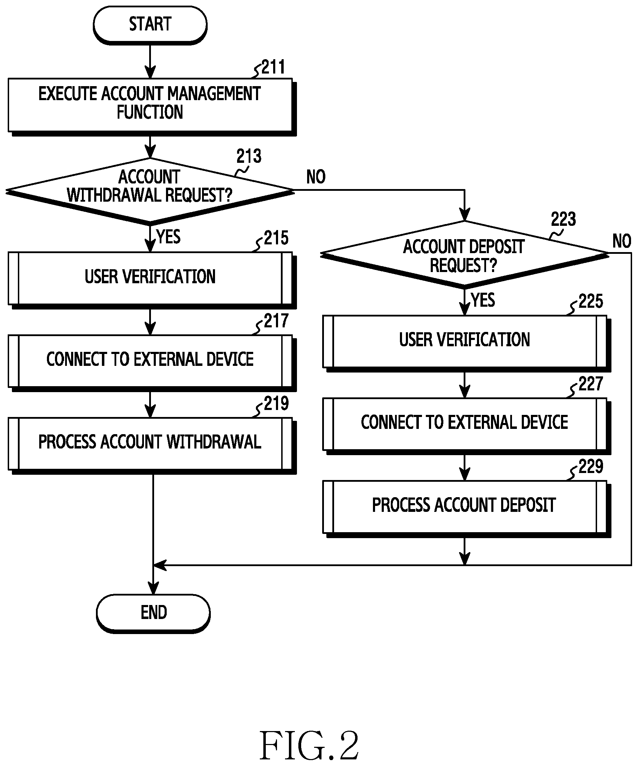

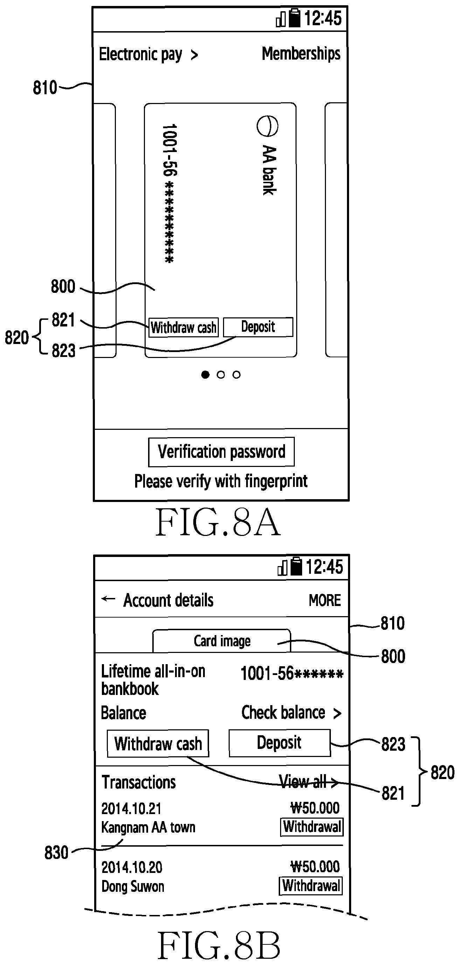

FIG. 2 depicts a flowchart of an operation method of an electronic device 100 according to various embodiments. FIG. 8, FIG. 9, FIG. 10, FIG. 11A, FIG. 11B, FIG. 11C, FIG. 12A, FIG. 12B, FIG. 12C, FIG. 13A, FIG. 13B, FIG. 13C, FIG. 13D, FIG. 14, FIG. 15A, FIG. 15B, FIG. 16A, FIG. 16B, FIG. 16C, and FIG. 16D depict diagrams of a screen for explaining an operation method of an electronic device 100 according to various embodiments.

Referring to FIG. 2, the operation method of the electronic device 100 according to various embodiments can start when the control unit 160 executes an account management function in step 211. The account management function can be an application for using a financial transaction service based on an electronic card 800, or managing transaction history. For example, when an icon assigned the account management function is selected, the control unit 160 can execute the account management function.

According to an embodiment, the control unit 160 can display an account management screen 810 as shown in FIG. 8A or FIG. 8B. In so doing, the control unit 160 can determine the electronic card 800. For example, the control unit 160 can determine the electronic card 800 based on a user's selection. The control unit 160 can display, in the account management screen 810, at least one of the electronic card 800, an account transaction item 820 for an account transaction according to the electronic card 800, or transaction history 830 of the electronic card 800. For example, the electronic card 800 can include a withdrawal card for using a financial transaction service. For doing so, the electronic card 800 can be pre-registered by the user in response to the account management function. The account transaction item 820 can include at least one of an account withdrawal item 821 or an account deposit item 823.

Next, when a request for the account withdrawal occurs in accordance with the electronic card 800, the control unit 160 can detect it in step 213. In step 215, the control unit 160 can perform user verification for the electronic card 800. For example, the control unit 160 can detect user identification information. Thus, the control unit 160 can compare the user identification information with pre-registered identification information in accordance with the electronic card 800. Herein, the identification information can be registered to grant access to the account management function in accordance with the electronic card 800. Alternatively, the control unit 160 can detect user verification information. Hence, the control unit 160 can compare the user verification information with pre-registered verification information in accordance with the electronic device 100. Herein, the verification information can be registered to grant access to at least one of the electronic device 100 or the electronic card 800.

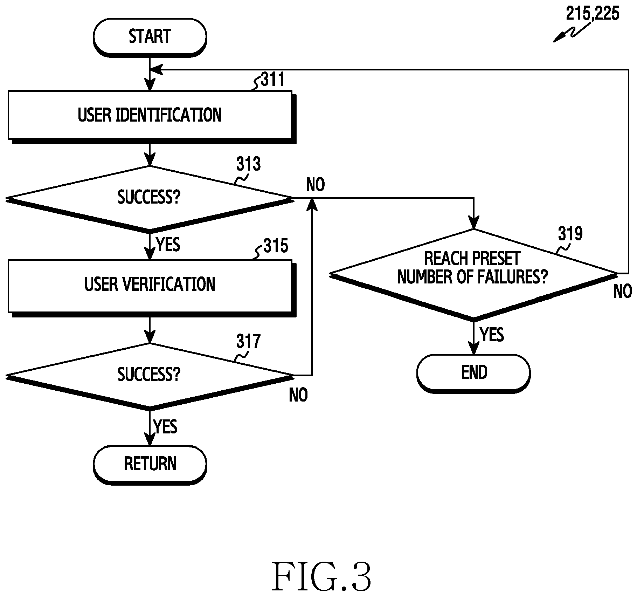

FIG. 3 depicts a flowchart of the user verification operation of FIG. 2.

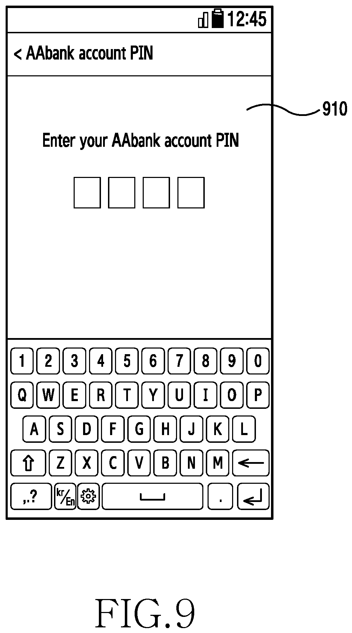

Referring to FIG. 3, the control unit 160 can perform user identification in accordance with the electronic card 800 in step 311. For doing so, in accordance with the electronic card 800, identification information for granting access to the account management function can be pre-registered to the electronic device 100. The identification information can include at least one of verification information, a password, a PIN code, a pattern, or biometric information. For example, the biometric information can include at least one of odor information, electromyogram information, brainwave information, electrocardiogram information, infrared information, iris information, or fingerprint information. The control unit 160 can detect user identification information. Hence, the control unit 160 can compare the user identification information with pre-registered identification information. For example, when the account withdrawal item 821 is selected in the account management screen 810, the control unit 160 can detect it as a request for the account withdrawal. In response, the control unit 160 can display user identification information 910 as shown in FIG. 9. The user identification screen 910 can include data for guiding the user to enter identification information.

Next, the control unit 160 can determine whether the user identification is successful in accordance with the electronic card 800 in step 313. In so doing, the control unit 160 can determine whether the user identification information matches the pre-registered identification information. When determining that the user identification information matches the pre-registered identification information, the control unit 160 can determine the successful user identification. Meanwhile, when determining that the user identification information does not match the pre-registered identification information, the control unit 160 can determine user identification failure. Also, the control unit 160 can count the number of failures. That is, the control unit 160 can increase the number of failures by one.

Next, when determining the successful user identification in accordance with the electronic card 800 in step 313, the control unit 160 can perform user verification in accordance with the electronic card 800 in step 315. For doing so, in accordance with at least one of the electronic device 100 or the electronic card 800, verification information for granting access to the electronic device 100 or the account management function can be pre-registered in the electronic device 100. The verification information can include at least one of verification information, a password, an identification code, a pattern, or biometric information. For example, the biometric information can include at least one of odor information, electromyogram information, brainwave information, electrocardiogram information, infrared information, iris information, or fingerprint information. Meanwhile, the verification information may be the same or different from the identification information. The control unit 160 can detect user verification information. Hence, the control unit 160 can compare the user verification information with the pre-registered verification information. Further, the control unit 160 can initialize the number of failures to zero.

Next, the control unit 160 can determine whether the user verification is successful in response to at least one of the electronic device 100 or the electronic card 800 in step 317. In so doing, the control unit 160 can determine whether the user verification information matches the pre-registered verification information. When determining that the user verification information matches the pre-registered verification information, the control unit 160 can determine the successful user verification. Meanwhile, when determining that the user verification information does not match the pre-registered verification information, the control unit 160 can determine user verification failure. Also, the control unit 160 can count the number of failures. That is, the control unit 160 can increase the number of failures by one.

Next, when determining the successful user verification for at least one of the electronic device 100 or the electronic card 800 in step 317, the control unit 160 can return to FIG. 2. Further, the control unit 160 can initialize the number of failures to zero.

Meanwhile, when determining the user identification failure in accordance with the electronic card 800 in step 313, the control unit 160 can determine whether the number of failures reaches a preset number of times in step 319. Alternatively, when determining the user verification failure for at least one of the electronic device 100 or the electronic card 800 in step 317, the control unit 160 can determine whether the number of failures reaches the preset number of times in step 319.

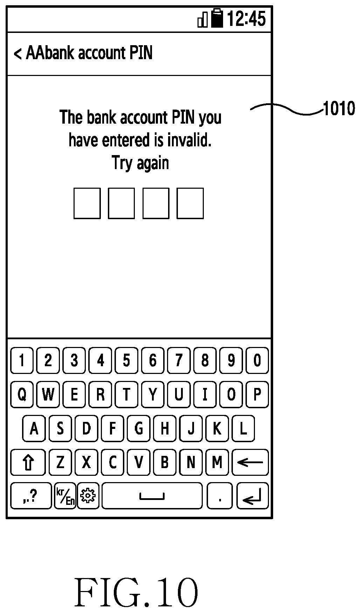

Next, when determining that the number of failures does not reach the preset number of times in step 319, the control unit 160 can return to step 311. The control unit 160 may repeat at least part of step 311 through step 319. That is, the control unit 160 can re-perform at least one of the user identification or the user verification. For example, the control unit 160 can display a user re-identification screen 1010 as shown in FIG. 10. The user re-identification screen 1010 can include data for guiding the user to enter identification information.

Meanwhile, when determining that the number of failures reaches the preset number of times in step 319, the control unit 160 can finish the operation method of the electronic device 100. That is, the control unit 160 can ignore the request for the account withdrawal. The control unit 160 can abort the process for the account withdrawal.

Next, the control unit 160 can perform connection to an external device in step 217. That is, when succeeding in the user verification, the control unit 160 can connect to the external device (not shown) by activating short-range communication. For example, the control unit 160 can activate at least one of MST or NFC. According to an embodiment, the external device can be an ATM of a financial institution.

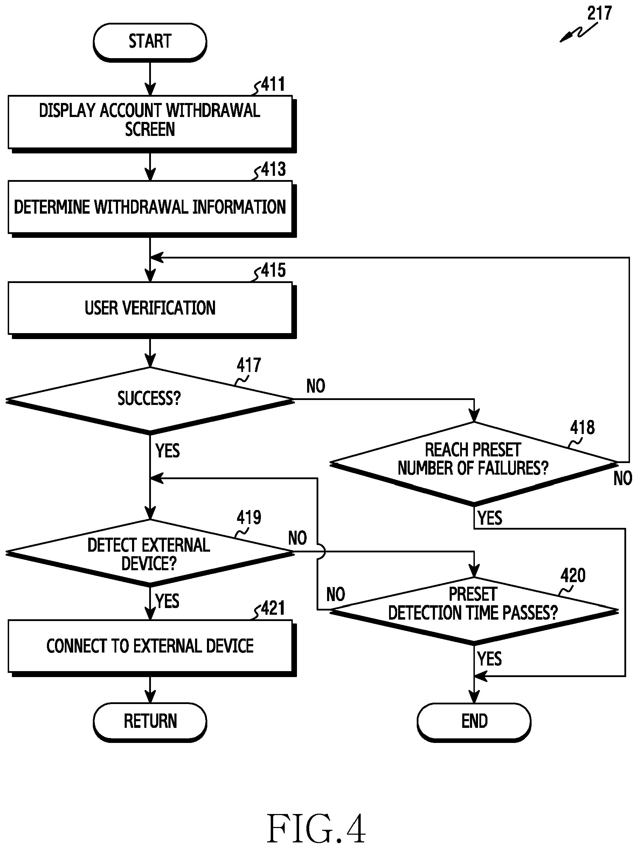

FIG. 4 depicts a flowchart of a connection operation to an external device of FIG. 2.

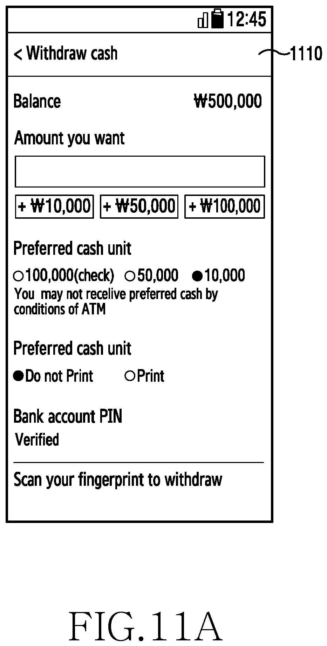

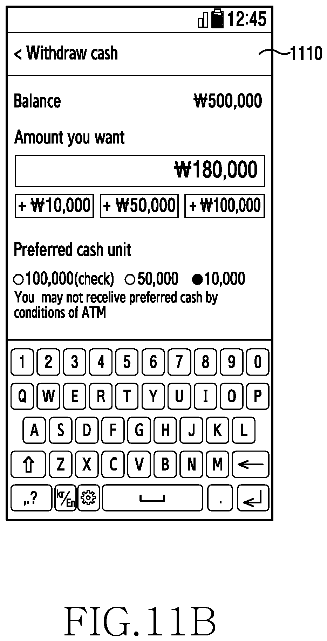

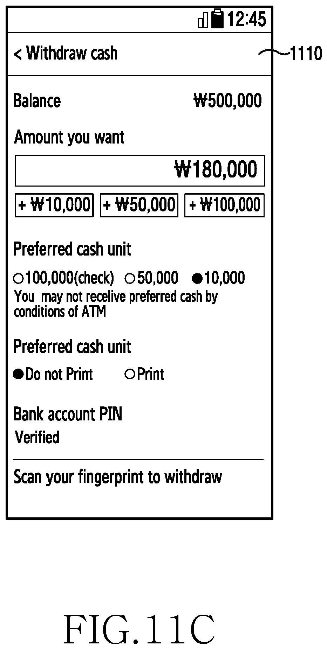

Referring to FIG. 4, the control unit 160 can display an account withdrawal screen 1110 in step 411. The account withdrawal screen 1110 can include data for guiding the user to enter withdrawal information. For example, the control unit 160 can display the account withdrawal screen 1110 as shown in FIG. 11A. The withdrawal information includes account identification information and an amount in the account, and can include at least one of a withdrawal amount, an amount unit, or whether to receive a withdrawal receipt. The control unit 160 can determine withdrawal information based on the account withdrawal screen 1110 in step 413. In so doing, the control unit 160 can determine the withdrawal information based on a user' input in response to the account withdrawal screen 1110. For example, the control unit 160 can determine the withdrawal amount and the amount unit in accordance with the account withdrawal screen 1110 as shown in FIG. 11B, and further determine whether to receive the withdrawal receipt in response to the account withdrawal screen 1110 as shown in FIG. 11C.

Next, the control unit 160 can perform user verification in step 415. For doing so, in accordance with at least one of the electronic device 100 or the electronic card 800, verification information for granting access to the electronic device 100 or the account management function can be pre-registered in the electronic device 100. The verification information can include at least one of verification information, a password, an identification code, a pattern, or biometric information. For example, the biometric information can include at least one of odor information, electromyogram information, brainwave information, electrocardiogram information, infrared information, iris information, or fingerprint information. The control unit 160 can detect user verification information. Hence, the control unit 160 can compare the user verification information with the pre-registered verification information.

Next, the control unit 160 can determine whether the user verification is successful in accordance with at least one of the electronic device 100 or the electronic card 800 in step 417. In so doing, the control unit 160 can determine whether the user verification information matches the pre-registered verification information. When determining that the user verification information matches the pre-registered verification information, the control unit 160 can determine the successful user verification. Meanwhile, when determining that the user verification information does not match the pre-registered verification information, the control unit 160 can determine user verification failure. Also, the control unit 160 can count the number of failures. That is, the control unit 160 can increase the number of the failures by one.

Next, when determining the user verification failure in accordance with at least one of the electronic device 100 or the electronic card 800 in step 417, the control unit 160 can determine whether the number of failures reaches the preset number of times in step 418. For example, the control unit 160 can display data for notifying the user verification failure to the user.

Next, when determining that the number of failures does not reach the preset number of times in step 418, the control unit 160 can return to step 415. The control unit 160 may repeat at least part of step 415 through step 418. That is, the control unit 160 can re-perform the user verification.

Meanwhile, when determining that the number of failures reaches the preset number of times in step 418, the control unit 160 can finish the operation method of the electronic device 100. That is, the control unit 160 can ignore the request for the account withdrawal. The control unit 160 can abort the process for the account withdrawal. For example, the control unit 160 can delete the electronic card 800 from the account management function, and additionally delete other electronic card of a corresponding financial institution as well as the electronic card 800.

Meanwhile, when determining the successful user verification in accordance with at least one of the electronic device 100 or the electronic card 800 in step 417, the control unit 160 can determine whether an external device is detected in step 419. In so doing, when the electronic device 100 approaches the external device, the control unit 160 can detect the external device. For doing so, the control unit 160 can send a request signal through the communication unit 110, and receive a response signal from the external device in response. Alternatively, the control unit 160 can receive a detection signal from the external device through the communication unit 110. Further, the control unit 160 can initialize the number of failures to zero.

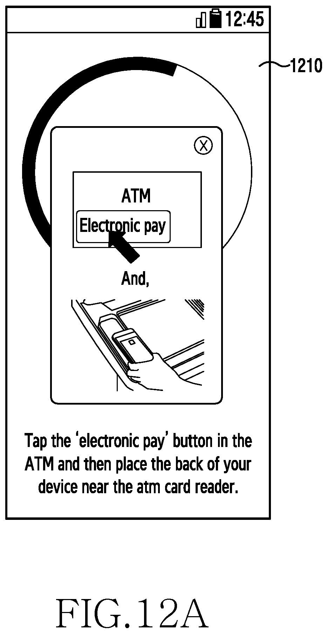

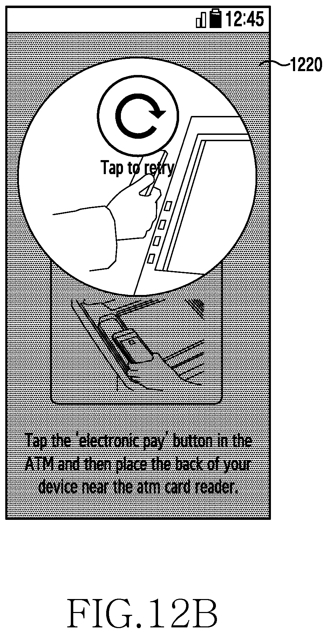

For example, the control unit 160 can display an access guide screen 1210 as shown in FIG. 12A. The access guide screen 1210 can include data for guiding the user to approach the external device. The control unit 160 can determine whether the external device is detected for a preset detection time. For example, the detection time can be divided into a plurality of unit times. Every time each unit time passes, the control unit 160 can display a redetection screen 1220 as shown in FIG. 12B. The redetection screen 1220 can include data for inquiring the user of whether to extend the time.

Next, when determining no detection of the external device in step 419, the control unit 160 can determine whether the detection time passes in step 420. That is, the control unit 160 can determine whether the external device is not detected and the detection time passes.

Next, when determining that the detection time does not pass in step 420, the control unit 160 can return to step 419. The control unit 160 can repeat at least one of step 419 or step 420.

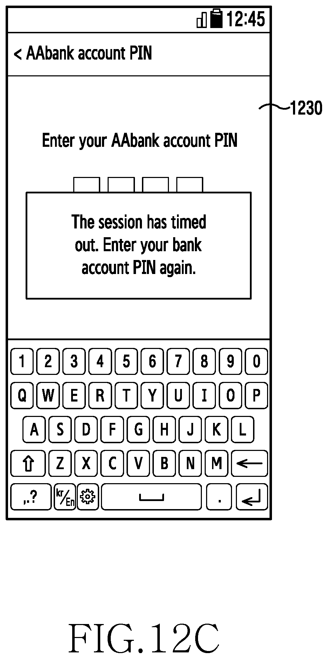

Meanwhile, when determining that the detection time passes in step 420, the control unit 160 can finish the operation method of the electronic device 100. That is, the control unit 160 can ignore the request for the account withdrawal. The control unit 160 can abort the process for the account withdrawal. For example, the control unit 160 can display a process abort screen 1230 as shown in FIG. 12C. The process abort screen 1230 can include data for notifying the user of the process abortion for the account withdrawal due to the elapsed detection time.

Meanwhile, when determining the external device detected in step 419, the control unit 160 can establish connection to the external device in step 421. The control unit 160 can return to FIG. 2.

Lastly, the control unit 160 can process the account withdrawal through the external device in step 219. That is, upon connecting to the external device, the control unit 160 can communicate with the external device and process the account withdrawal. In so doing, the control unit 160 can request the account withdrawal from the external device. According to an embodiment, the external device can be an ATM of a financial institution. In so doing, the control unit 160 can request the account withdrawal from the external device using short-range communication. For example, the control unit 160 can use at least one of the MST or the NFC. When the account withdrawal is completed, the control unit 160 can deactivate the short-range communication.

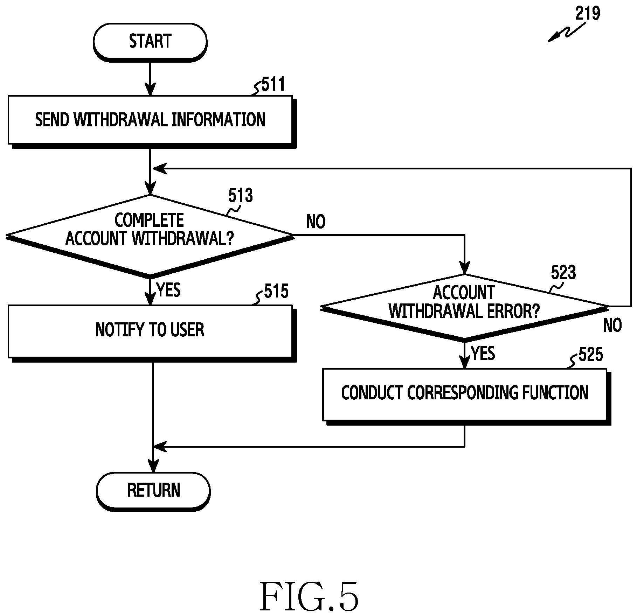

FIG. 5 depicts a flowchart of an account withdrawal processing operation of FIG. 2.

Referring to FIG. 5, the control unit 160 can send withdrawal information to an external device in step 511. The withdrawal information includes account identification information and an amount in the account, and can include at least one of a withdrawal amount, an amount unit, or whether to receive a withdrawal receipt. Hence, the control unit 160 can request the account withdrawal from the external device. For example, when receiving the withdrawal information, the external device can provide the account withdrawal to the user based on the withdrawal information. That is, the external device can provide the withdrawal account in the account unit, and further provide the withdrawal receipt if necessary. Hence, the user can withdraw the withdrawal amount from the external device in the amount unit, and obtain the withdrawal receipt if necessary.

Next, when the account withdrawal is completed, the control unit 160 can detect it in step 513. In so doing, the control unit 160 can detect the completion of the account withdrawal through the external device. For example, when the account withdrawal is completed, the external device can send a complete message to the electronic device 100. Thus, upon receiving the complete message from the external device, the control unit 160 can detect the account withdrawal completion.

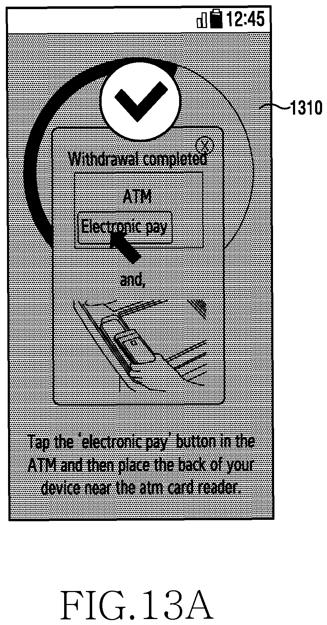

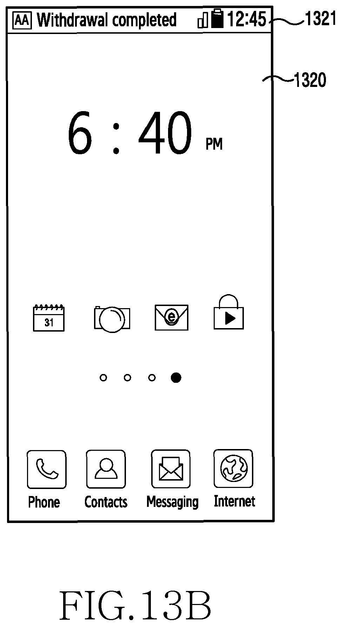

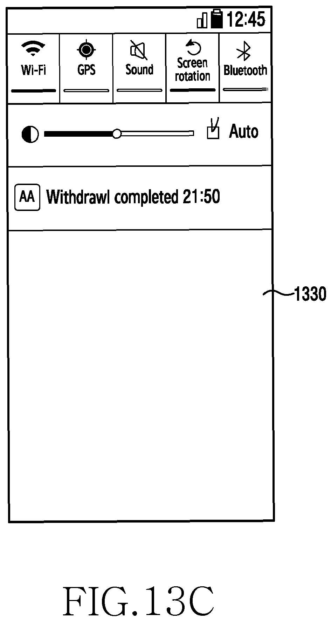

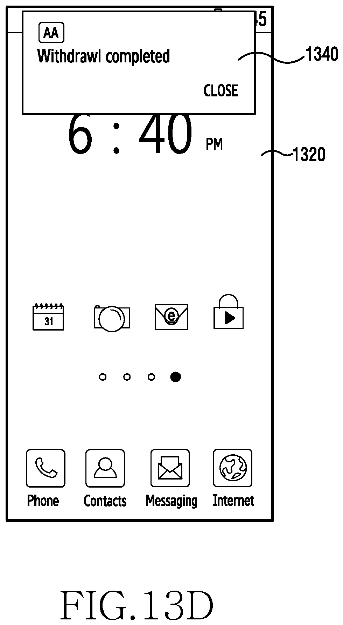

Next, the control unit 160 can output a user notification indicating the account withdrawal complete in step 515. The control unit 160 can return to FIG. 2. For example, the control unit 160 can display a withdrawal complete screen 1310 as shown in FIG. 13A. The withdrawal complete screen 1310 can include data for notifying the account withdrawal complete to the user. Also, the control unit 160 can display a complete message on a status bar 1321 of a background screen 1320 as shown in FIG. 13B. Meanwhile, the control unit 160 can display the complete message in a notification screen 1330 as shown in FIG. 13C. That is, when the user controls the status bar 1321 of the background screen 1320, the control unit 160 can display the complete message on the notification screen 1330. Alternatively, the control unit 160 can display the complete message on a notification window 1340 in the background screen 1320 as shown in FIG. 13D. Meanwhile, although not depicted, when the user selects the complete message in the notification screen 1330 or the notification window 1340, the control unit 160 can further display the account withdrawal information.

Meanwhile, when the account withdrawal is not completed and an error occurs in the account withdrawal in step 513, the control unit 160 can detect it in step 523. In so doing, the control unit 160 can detect the error of the account withdrawal through the external device. For example, when the error occurs in the account withdrawal, the external device can send an error message to the electronic device 100. Hence, upon receiving the error message from the external device, the control unit 160 can detect the error of the account withdrawal. For example, the error message can include an error cause of the account withdrawal.

Next, the control unit 160 can perform a corresponding function in response to the account withdrawal error in step 525. The control unit 160 can return to FIG. 2. For example, the control unit 160 can access a financial institution in accordance with the electronic card 100. The control unit 160 can send a call or send a message to the financial institution, and access a home page of the financial institution.

Meanwhile, when a request for the account withdrawal is not detected and a request for account deposit occurs in step 213, the control unit 160 can detect it in step 223. The control unit 160 can perform user verification in accordance with the electronic card 800 in step 225. For example, the control unit 160 can detect user identification information. Thus, the control unit 160 can compare the user identification information with pre-registered identification information in accordance with the electronic card 800. Herein, the identification information can be registered to grant the access to the account management function in accordance with the electronic card 800. Alternatively, the control unit 160 can detect user verification information. Hence, the control unit 160 can compare the user verification information with pre-registered verification information in accordance with the electronic device 100. Herein, the verification can be registered to grant the access to at least one of the electronic device 100 or the electronic card 800. In so doing, the control unit 160 can perform the user verification operation as mentioned in FIG. 3.

Next, the control unit 160 can perform connection to the external device in step 227. That is, when succeeding in the user verification, the control unit 160 can connect to the external device (not shown) by activating the short-range communication. For example, the control unit 160 can activate at least one of the MST or the NFC. According to an embodiment, the external device can be an ATM of a financial institution.

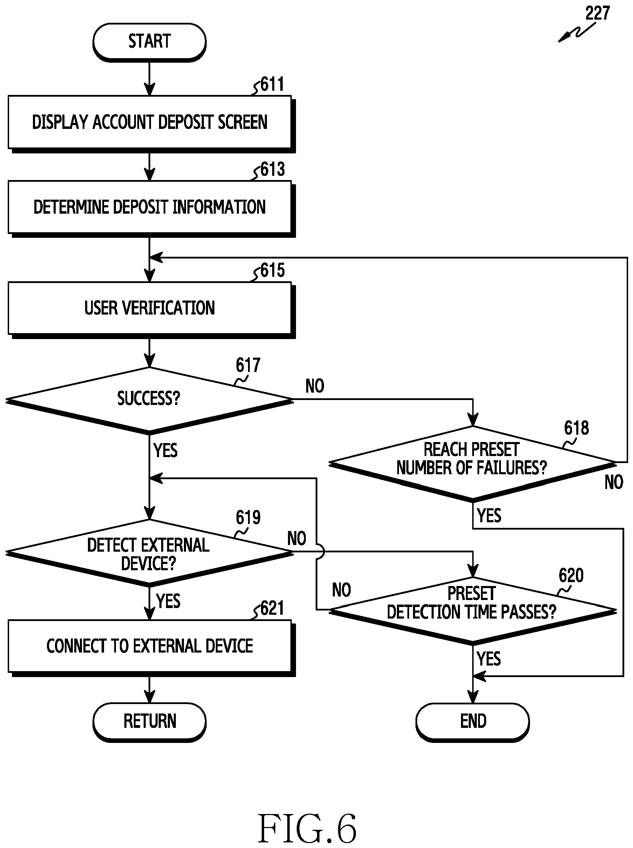

FIG. 6 depicts a flowchart of a connection operation to an external device of FIG. 2.

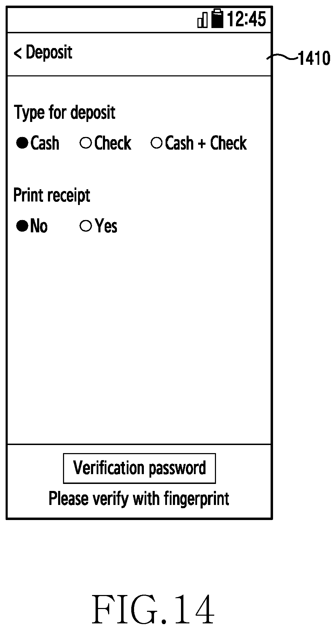

Referring to FIG. 6, the control unit 160 can display an account deposit screen 1410 in step 611. The account deposit screen 1610 can include data for guiding the user to enter deposit information. For example, the control unit 160 can display the account deposit screen 1410 as shown in FIG. 14. The deposit information includes account identification information and an amount in the account, and can include at least one of a deposit type indicating any one of cash or check, or whether to receive a deposit receipt. The control unit 160 can determine deposit information based on the account deposit screen 1410 in step 613. In so doing, the control unit 160 can determine the deposit information based on a user' input in accordance with the account deposit screen 1410. For example, the control unit 160 can determine the deposit type and whether to receive the deposit receipt in accordance with the account deposit screen 1410.

Next, the control unit 160 can perform user verification in step 615. For doing so, according to at least one of the electronic device 100 or the electronic card 800, verification information for granting access to the electronic device 100 or the account management function can be pre-registered in the electronic device 100. The verification information can include at least one of verification information, a password, an identification code, a pattern, or biometric information. For example, the biometric information can include at least one of odor information, electromyogram information, brainwave information, electrocardiogram information, infrared information, iris information, or fingerprint information. The control unit 160 can detect user verification information. Hence, the control unit 160 can compare the user verification information with the pre-registered verification information.

Next, the control unit 160 can determine whether the user verification is successful in accordance with at least one of the electronic device 100 or the electronic card 800 in step 617. In so doing, the control unit 160 can determine whether the user verification information matches the pre-registered verification information. When determining that the user verification information matches the pre-registered verification information, the control unit 160 can determine the successful user verification. Meanwhile, when determining that the user verification information does not match the pre-registered verification information, the control unit 160 can determine user verification failure. Also, the control unit 160 can count the number of failures. That is, the control unit 160 can increase the number of the failures by one.

Next, when determining the user verification failure for at least one of the electronic device 100 or the electronic card 800 in step 617, the control unit 160 can determine whether the number of failures reaches the preset number of times in step 618. For example, the control unit 160 can display data for notifying the user verification failure to the user.

Next, when determining that the number of failures does not reach the preset number of times in step 618, the control unit 160 can return to step 615. The control unit 160 can repeat at least part of step 615 through step 618. That is, the control unit 160 can re-perform the user verification.

Meanwhile, when determining that the number of failures reaches the preset number of times in step 618, the control unit 160 can finish the operation method of the electronic device 100. That is, the control unit 160 can ignore the request for the account deposit. The control unit 160 can abort the process for the account deposit. For example, the control unit 160 can delete the electronic card 800 from the account management function, and additionally delete other electronic card of a corresponding financial institution as well as the electronic card 800.

Meanwhile, when determining the successful user identification for at least one of the electronic device 100 or the electronic card 800 in step 617, the control unit 160 can determine whether an external device is detected in step 619. In so doing, when the electronic device 100 approaches the external device, the control unit 160 can detect the external device. For doing so, the control unit 160 can send a request signal through the communication unit 110, and receive a response signal from the external device in response. Alternatively, the control unit 160 can receive a detection signal from the external device through the communication unit 110. Further, the control unit 160 can initialize the number of failures to zero.

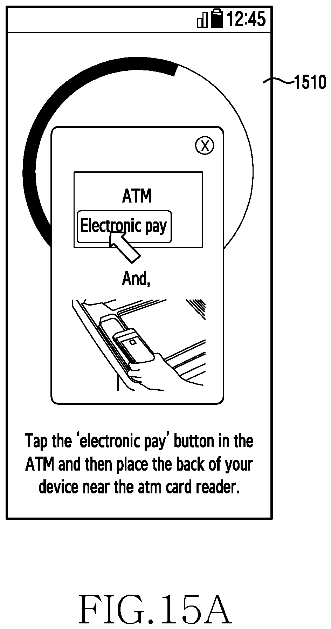

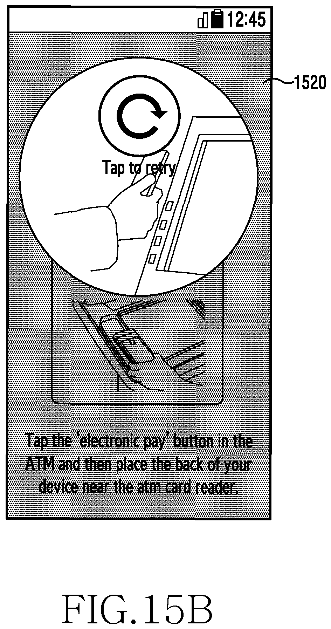

For example, the control unit 160 can display an access guide screen 1510 as shown in FIG. 15A. The access guide screen 1510 can include data for guiding the user to approach the external device. The control unit 160 can determine whether the external device is detected for a preset detection time. For example, the detection time can be divided into a plurality of unit times. Every time each unit time passes, the control unit 160 can display a redetection screen 1520 as shown in FIG. 15B. The redetection screen 1520 can include data for inquiring the user of whether to extend the time.

Next, when determining no detection of the external device in step 619, the control unit 160 can determine whether the detection time passes in step 620. That is, the control unit 160 can determine whether the external device is not detected and the detection time passes.

Next, when determining that the detection time does not pass in step 620, the control unit 160 can return to step 619. The control unit 160 can repeat at least one of step 619 or step 620.

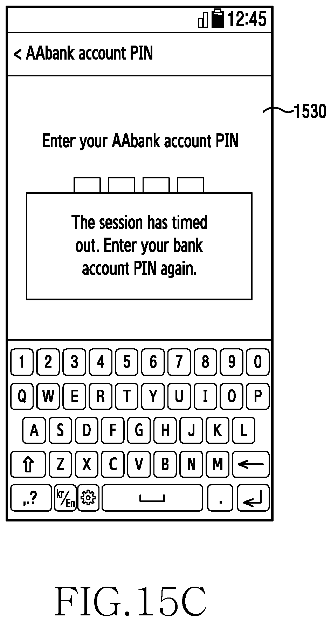

Meanwhile, when determining that the detection time passes in step 620, the control unit 160 can finish the operation method of the electronic device 100. That is, the control unit 160 can ignore the request for the account deposit. The control unit 160 can abort the process for the account deposit. For example, the control unit 160 can display a process abort screen 1530 as shown in FIG. 15C. The process abort screen 1530 can include data for informing the user of the process abortion for the account deposit due to the elapsed detection time.

Meanwhile, when determining the external device detected in step 619, the control unit 160 can establish connection to the external device in step 621. The control unit 160 can return to FIG. 2.

Lastly, the control unit 160 can process the account deposit through the external device in step 229. That is, upon connecting to the external device, the control unit 160 can communicate with the external device and process the account deposit. In so doing, the control unit 160 can request the account deposit from the external device. According to an embodiment, the external device can be an ATM of a financial institution. In so doing, the control unit 160 can request the account deposit from the external device using the short-range communication. For example, the control unit 160 can use at least one of the MST or the NFC. When the account deposit is completed, the control unit 160 can deactivate the short-range communication.

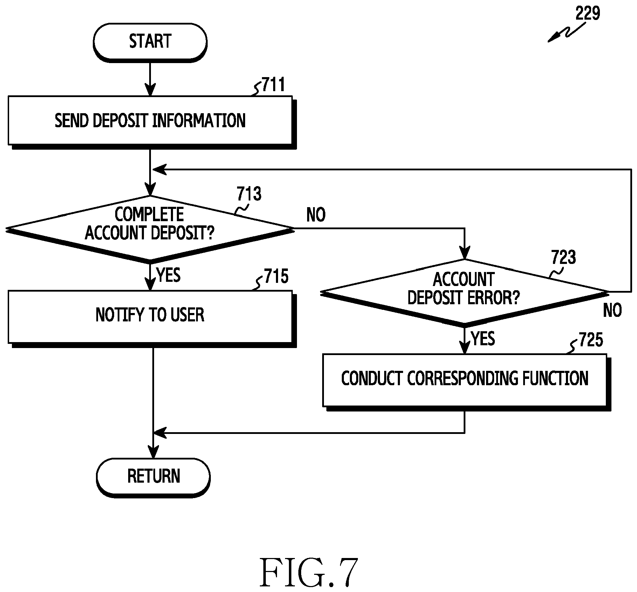

FIG. 7 depicts a flowchart of an account deposit processing operation of FIG. 2.

Referring to FIG. 7, the control unit 160 can send deposit information to an external device in step 711. The deposit information includes account identification information and an amount in the account, and can include at least one of a deposit type indicating at least one of cash or check, or whether to receive a deposit receipt. Hence, the control unit 160 can request the account deposit from the external device. For example, when receiving the deposit information, the external device can process the account deposit of the user based on the deposit information. That is, the external device can process the deposit amount according to the deposit type, and provide the deposit receipt if necessary. Hence, the user can provide the deposit amount to the external device, and obtain the deposit receipt if necessary.

Next, when the account deposit is completed, the control unit 160 can detect it in step 713. In so doing, the control unit 160 can detect the completion of the account deposit through the external device. For example, when completing the account deposit, the external device can send a complete message to the electronic device 100. Thus, upon receiving the complete message from the external device, the control unit 160 can detect the account deposit complete.

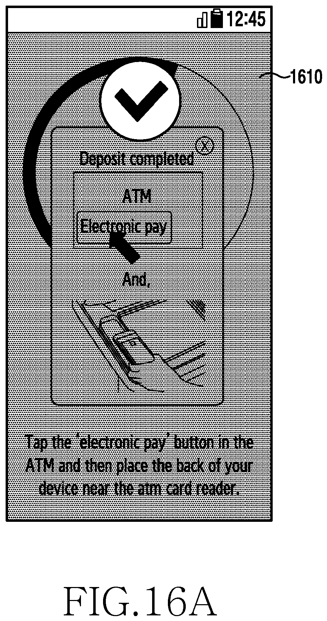

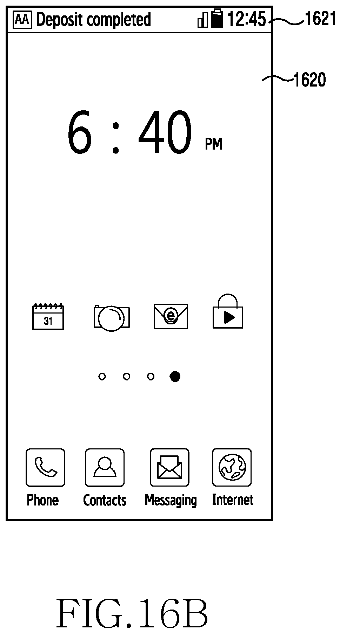

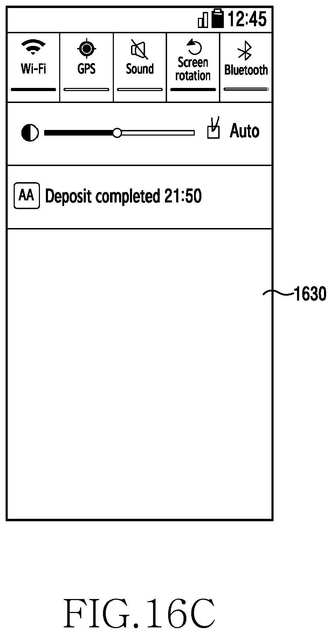

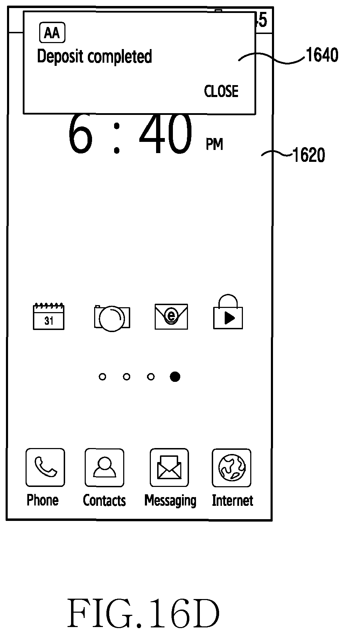

Next, the control unit 160 can output a user notification indicating the account deposit complete in step 715. The control unit 160 can return to FIG. 2. For example, the control unit 160 can display a deposit complete screen 1610 as shown in FIG. 16A. The deposit complete screen 1610 can include data for notifying the account deposit complete to the user. Also, the control unit 160 can display a complete message on a status bar 1621 of a background screen 1620 as shown in FIG. 16B. Meanwhile, the control unit 160 can display the complete message in a notification screen 1630 as shown in FIG. 16C. That is, when the user controls the status bar 1621 of the background screen 1620, the control unit 160 can display the complete message in the notification screen 1630. Alternatively, the control unit 160 can display the complete message on a notification window 1640 on the background screen 1620 as shown in FIG. 16D. Meanwhile, although not depicted, when the user selects the complete message in the notification screen 1630 or the notification window 1640, the control unit 160 can further display the account deposit information.

Meanwhile, when the account deposit is not completed and an error occurs in the account deposit in step 713, the control unit 160 can detect it in step 723. In so doing, the control unit 160 can detect the error of the account deposit through the external device. For example, when the error occurs in the account deposit, the external device can send an error message to the electronic device 100. Hence, upon receiving the error message from the external device, the control unit 160 can detect the error of the account deposit. For example, the error message can include an error cause of the account deposit.

Next, the control unit 160 can perform a corresponding function in response to the account deposit error in step 725. The control unit 160 can return to FIG. 2. For example, the control unit 160 can access a financial institution in accordance with the electronic card 100. The control unit 160 can send a call or send a message to the financial institution, and access a home page of the financial institution.

According to various embodiments, an operation method of an electronic device 100 can include performing user verification for an electronic card 800, detecting approach to an external device, and performing an account transaction through the external device using the electronic card 800.

According to various embodiments, performing the account transaction can include sending transaction information for the account transaction to the external device.

According to various embodiments, detecting the approach can include determining the transaction information in accordance with the electronic card 800, performing the user verification in accordance with the electronic card 800, and detecting the external device based on success of the user verification.

According to various embodiments, the account transaction can include an account deposit.

According to various embodiments, the transaction information can include at least one of a deposit type indicating at least one of cash or a check, or whether to receive a deposit receipt.

According to various embodiments, the account transaction can include an account withdrawal.

According to various embodiments, the transaction information can include at least one of a withdrawal amount, an amount unit, or whether to receive a withdrawal receipt.

According to various embodiments, determining the transaction information can include displaying a screen for entering the transaction information, and based on an input of a user in response to the screen, determining the transaction information.

According to various embodiments, the user verification can include performing the user identification, and performing the user verification based on success of the user identification.

According to various embodiments, the user verification can further include, based on failure of the user identification or failure of the user verification, re-performing the user identification.

According to various embodiments, the operation method of the electronic device 100 can further include detecting completion of the account transaction through the external device.

According to various embodiments, detecting the completion can include receiving a complete message from the external device, and displaying the complete message.

According to various embodiments, the electronic device 100 can perform the account management function based on the user verification. That is, the electronic device 100 can conduct the account transaction, for example, at least one of the account withdrawal or the account deposit through the external device. For doing so, the electronic device 100 can send the transaction information for the account transaction to the external device. Hence, the user of the electronic device 100 does not have to enter the transaction information directly to the external device. Therefore, security of the user's personal information can be enhanced in the electronic device 100. Further, use efficiency of the electronic device 100 can be enhanced.

Meanwhile, the embodiments of the present invention disclosed in the specification and the drawings present specific examples to ease the descriptions of the technical details of the present invention and to aid the understanding of the present invention, and are not intended to limit the scope of the present invention. That is, it is apparent to those skilled in the art of the present invention that modifications based on the technical concept of the present invention are possible.

## Claims

1. An operation method of an electronic device, comprising:
performing user verification for an electronic card;
detecting approach to an external device; and
performing an account transaction through the external device using the electronic card.

2. The method of claim 1, wherein performing the account transaction comprises:
sending transaction information for the account transaction to the external device.

3. The method of claim 2, wherein detecting the approach comprises:
determining the transaction information in accordance with the electronic card;
performing the user verification in accordance with the electronic card; and
detecting the external device based on success of the user verification.

4. The method of claim 2, wherein the account transaction comprises an account deposit, and
the transaction information comprises at least one of a deposit type indicating at least one of cash or a check, or whether to receive a deposit receipt.

5. The method of claim 2, wherein the account transaction comprises an account withdrawal, and
the transaction information comprises at least one of a withdrawal amount, an amount unit, or whether to receive a withdrawal receipt.

6. The method of claim 3, wherein determining the transaction information comprises:
displaying a screen for entering the transaction information; and
based on an input of a user in response to the screen, determining the transaction information.

7. The method of claim 1, wherein the user verification comprises:
performing the user identification; and
performing the user verification based on success of the user identification.

8. The method of claim 7, wherein the user verification further comprises:
based on failure of the user identification or failure of the user verification, re-performing the user identification.

9. The method of claim 1, further comprising:
detecting completion of the account transaction through the external device.

10. The method of claim 9, wherein detecting the completion comprises:
receiving a complete message from the external device; and
displaying the complete message.

11. An electronic device comprising:
a communication unit for communicating with an external device; and
a control unit functionally coupled with the communication unit,
wherein the control unit performs user verification in accordance with an electronic card,
detects approach to an external device, and
performs an account transaction through the external device using the electronic card.

12. The electronic device of claim 11, wherein the control unit further sends transaction information for the account transaction to the external device.

13. The electronic device of claim 12, wherein the control unit further determines the transaction information in accordance with the electronic card,
performs the user verification in accordance with the electronic card, and
detects the external device based on success of the user verification.

14. The electronic device of claim 12, wherein the account transaction comprises an account deposit, and
the transaction information comprises at least one of a deposit type indicating at least one of cash or a check, or whether to receive a deposit receipt.

15. The electronic device of claim 12, wherein the account transaction comprises an account withdrawal, and
the transaction information comprises at least one of a withdrawal amount, an amount unit, or whether to receive a withdrawal receipt.

16. The electronic device of claim 13, further comprising:
a display unit functionally coupled with the control unit,
wherein the control unit further displays a screen for entering the transaction information, and
based on an input of a user in response to the screen, determines the transaction information.

17. The electronic device of claim 11, wherein the control unit further performs the user identification, and
performs the user verification based on success of the user identification.

18. The electronic device of claim 17, wherein the control unit further re-performs the user identification based on failure of the user identification or failure of the user verification.

19. The electronic device of claim 11, wherein the control unit further detects completion of the account transaction through the external device.

20. The electronic device of claim 19, further comprising:
a display unit functionally coupled with the control unit,
wherein the control unit further receives a complete message from the external device, and
displays the complete message.
